# EUROPEAN PATENT APPLICATION

(11) **EP 4 421 953 A1**
(43) Date of publication of application: **28.08.2024**
(21) Application number: 23216951.6
(22) Date of filing: 15.12.2023
(51) Int. Cl.: H01M 50/107, H01M 50/152, H01M 50/179, H01M 50/188, H01M 50/533, H01M 50/536, H01M 50/559, H01M 50/566

(54) **SECONDARY BATTERY**

(30) Priority: 27.02.2023 CN 202320329767 U
(71) Applicant: AESC Japan Ltd., Yokohama-Shi, Kanagawa 220-0012 (JP)
(72) Inventor: CHE, Peipei, Jiangyin City, Wuxi City, 214443 (CN)
(74) Representative: Becker, Eberhard

(57) **Abstract**

Disclosed are a secondary battery (100) and an electrical device including the secondary battery (100). The secondary battery (100) includes: a housing (110), an electrode assembly (120), an electrode pillar (130) and a current collecting portion (140). The electrode assembly (120) is disposed in the housing (110) in a sealed manner; the electrode pillar (130) penetrates through the housing (110) in a sealed and insulating manner, and is disposed with a thinned region (131) with a thickness of T1; the current collecting portion (140) is disposed in the housing (110) and electrically connected with the electrode of the electrode assembly (120); a welding portion (141) with a thickness of T2 is disposed on the current collecting portion (140) and T2 is greater than 0.3T1; the thinned region (131) is in conductive contact with the welding portion (141) and is fixed through welding.

## Description

### BACKGROUND

### Technical Field

The disclosure relates to the field of battery technology, and in particular to a secondary battery.

### Description of Related Art

Among the mainstream solutions for electrical connection and fixation of a positive electrode pillar and a current collecting portion of cylindrical batteries, one of them adopts torque welding and another one adopts laser welding (seam welding or penetration welding).

When performing torque welding, it is required for a welding pin to be inserted from the center hole of an electrode sheet assembly. Because the center hole is small (5 mm to 8 mm) in general and the diameter of the welding pin is large, the requirement for positioning accuracy is extremely high, the production efficiency is low, and the electrode sheet assembly is often damaged. On the other hand, there is no effective way to separate and suck out the metal shavings generated during the welding process when adopting torque welding, as the metal shavings remain inside the secondary battery, safety issues of the secondary battery arise. In the meantime, the welding area for performing torque welding is limited, and the current-carrying capacity is limited. Moreover, there are no effective measures to detect and identify the welding effect on the inside, so it is impossible to determine the quality of the welding effect.

When using a seam welding method among the laser welding methods, the size of an electrode pillar region is small in general, and the strength and current-carrying capacity are limited. On the other hand, when the pillar integrated on the current collecting portion passes through the through hole of the electrode pillar, the required accuracy is influenced by the accuracy of an electrode assembly entering the housing, which causes difficulties in configuration and thus having considerable impacts on the production efficiency. Besides, metal shavings generated from scratches during the perforation process remain inside the secondary battery, which causes safety issues of the secondary battery.

### SUMMARY

In view of the above shortcomings of the related art, the present disclosure provides a secondary battery and an electrical device including the secondary battery to solve the welding problem in welding the electrode pillar and the current collecting portion of existing secondary batteries.

In order to achieve the above purpose and other related purposes, a first aspect of the present disclosure provides a secondary battery, which includes: a housing, an electrode assembly, an electrode pillar and a current collecting portion. The electrode assembly is sealed and disposed in the housing; the electrode pillar passes through the housing in a sealed and insulating manner, and is disposed with a thinned region with a thickness of T1; the current collecting portion is disposed in the housing and electrically connected with an electrode of the electrode assembly; the current collecting portion is disposed with a welding portion with a thickness of T2, and T2 is greater than 0.3T1; the thinned region is in conductive contact with the welding portion and is fixed through welding.

In an example of the secondary battery of the present disclosure, a welding mark is disposed on the wall of the thinned region away from the welding portion.

In an example of the secondary battery of the present disclosure, the welding mark is annular.

In an example of the secondary battery of the present disclosure, a welding positioning structure is disposed on the thinned region.

In an example of the secondary battery of the present disclosure, the thinned region is circular, and the welding positioning structure is disposed at the center of the circle.

In an example of the secondary battery of the present disclosure, a reinforcing structure is disposed in the thinned region.

In an example of the secondary battery of the present disclosure, the reinforcing structure includes a first protrusion, and the first protrusion is disposed on one or both sides of the thinned region along a penetration direction of the electrode pillar.

In an example of the secondary battery of the present disclosure, the reinforcing structure and the thinned region are an integral structure.

In an example of the secondary battery of the present disclosure, the thickness T1 of the thinned region is 0.1 mm to 2 mm, and the thickness T2 of the welding portion is 0.1 mm to 3 mm; the thickness T2 of the welding portion is greater than or equal to the thickness T1 of the thinned region.

In an example of the secondary battery of the present disclosure, the housing is a cylinder with one end closed and the other end open. The mounting hole of the electrode pillar is disposed on the closed end wall of the housing, and the electrode pillar is disposed in the mounting hole of the electrode pillar in a sealed and insulating manner.

In an example of the secondary battery of the present disclosure, the electrode pillar includes a conductive member, a first fixing portion and a second fixing portion, the conductive member penetrates into the mounting hole of the electrode pillar, the first fixing portion and the second fixing portion are respectively disposed at the outer end and the inner end of the conductive member, and are respectively clamped on the outer side and inner side of the closed end wall.

In an example of the secondary battery of the present disclosure, the projections of the first fixing portion and the second fixing portion along the penetration direction of the electrode pillar at least cover the projection of the mounting hole of the electrode pillar.

In an example of the secondary battery of the present disclosure, the insulating member is made of transparent or translucent plastic.

In an example of the secondary battery of the present disclosure, the insulation reinforcing structure includes chamfers or arcs disposed on the upper side and/or lower side of the side wall of the insulating member.

In an example of the secondary battery of the present disclosure, a middle portion of an end surface at one side of the electrode pillar facing away from the electrode assembly and/or a middle portion of an end surface of the electrode pillar facing the electrode assembly is recessed to form the thinned region.

In an example of the secondary battery of the present disclosure, the thinned region includes a first plane and a second plane disposed in parallel. The first plane is formed by a recess in the middle portion of an end surface of the electrode pillar away from the electrode assembly, and the second plane is formed by a recess in the middle portion of an end surface of the electrode pillar close to the electrode assembly.

In an example of the secondary battery of the present disclosure, a guiding structure that guides the welding portion to come into contact with the thinned region is disposed on the electrode pillar and/or the current collecting portion.

In an example of the secondary battery of the present disclosure, the guiding structure includes one or a combination of more of the following shapes: a rounded corner, a chamfer, or a slope shape.

In an example of the secondary battery of the present disclosure, an escape groove is disposed in the thinned region and/or on the current collecting portion.

In an example of the secondary battery of the present disclosure, the welding portion is a second protrusion disposed on the current collecting portion, and the second protrusion is fixed to the thinned region through welding.

In an example of the secondary battery of the present disclosure, the current collecting portion includes an annular current collecting portion body, the second protrusion is disposed at the center of the current collecting portion body, the height of the second protrusion is greater than the thickness of the current collecting portion body, and the thickness of the second protrusion is 0.3 mm to 3 mm.

In an example of the secondary battery of the present disclosure, a groove is disposed on the current collecting portion.

In an example of the secondary battery of the present disclosure, a sinking platform is disposed on the upper portion of the electrode pillar, and the projection of the sinking platform along the penetration direction of the electrode pillar at least covers the thinned region.

In an example of the secondary battery of the present disclosure, the secondary battery further includes an electrode pillar cover, the shape of the electrode pillar cover matches the sinking platform, and the electrode pillar cover is disposed on the sinking platform and is fixed to the electrode pillar through conductive welding.

In an example of the secondary battery of the present disclosure, a welding positioning structure is disposed on the electrode pillar cover.

In an example of the secondary battery of the present disclosure, the welding positioning structure is any one of a tapered hole, a cylindrical hole or a hemispherical hole.

In an example of the secondary battery of the present disclosure, a third protrusion is disposed on one side of the electrode pillar cover facing the thinned region, and the projection of the third protrusion along the penetration direction of the electrode pillar at least covers the thinned region.

In an example of the secondary battery of the present disclosure, a first protrusion corresponding to a position of the third protrusion is disposed on one side of the thinned region facing the electrode pillar cover, and the first protrusion is configured to abut against the third protrusion when the external force received by the electrode pillar cover is greater than a set threshold.

In an example of the secondary battery of the present disclosure, the gap between the first protrusion and the third protrusion is 0.05 mm to 0.5 mm.

In an example of the secondary battery of the present disclosure, the electrode pillar cover includes a third fixing portion and an external welding portion, and the thickness of the external welding portion is greater than the thickness of the third fixing portion.

In an example of the secondary battery of the present disclosure, the external welding portion is higher than the third fixing portion, and the height difference is 0.05 mm to 1 mm.

In the secondary battery of the disclosure, by disposing a thinned region on the electrode pillar, and disposing a welding portion on the current collecting portion, and making the thinned region to be in conductive contact with the welding portion, it will not be necessary for the welding device to enter the inside of the housing the secondary battery, and it is possible to perform welding on the current collecting portion and the thinned region outside the housing. In this manner, not only that the production efficiency may be improved, the requirement for process positioning accuracy may be reduced, and the metal shavings generated inside the secondary battery during the process of welding the electrode pillar and the current collecting portion may be avoided, thereby enhancing reliability and safety of the secondary battery. In the meantime, the secondary battery of the disclosure further limits the thicknesses of the thinned region and the welding region, which not only solves the problem of false welding or welding penetration, but also achieves a better welding effect and also improves the electrical connection strength and current-carrying capacity. Meanwhile, the welding portion of this type of secondary battery is located on the outside of the housing, which facilitates detection and identification and helps ensure consistency in production and manufacturing. The electrical device of the disclosure includes the secondary battery of the disclosure, and has high reliability in supplying electrical energy.

### BRIEF DESCRIPTION OF THE DRAWINGS

In order to explain the embodiments of the present disclosure or the technical solutions in the related art more clearly, the drawings needed to be used in the description of the embodiments or the related art will be briefly introduced below. Clearly, the drawings in the following description are only some embodiments of the present disclosure. For those of ordinary skill in the art, other drawings may be obtained based on these drawings without exerting creative efforts.
FIG. 1 is a three-dimensional schematic view of an embodiment of a secondary battery of the present disclosure.
FIG. 2 is a three-dimensional schematic view of an embodiment of the secondary battery of the present disclosure after the housing is removed.
FIG. 3 is a three-dimensional cross-sectional view of an embodiment of the secondary battery of the present disclosure.
FIG. 4 is a partial enlarged view of a region I in FIG. 3.
FIG. 5 is a schematic view showing partial configuration of the electrode pillar on the housing in an embodiment of the secondary battery of the present disclosure.
FIG. 6 is a schematic view showing partial configuration of the electrode pillar on the housing in an embodiment of the secondary battery of the present disclosure.
FIG. 7 is a schematic view showing partial configuration of the electrode pillar on the housing in an embodiment of the secondary battery of the present disclosure.
FIG. 8 is a schematic view showing partial configuration of the electrode pillar on the housing in an embodiment of the secondary battery of the present disclosure.
FIG. 9 is a schematic view showing partial configuration of the electrode pillar on the housing in an embodiment of the secondary battery of the present disclosure.
FIG. 10 is a schematic view showing partial configuration of the electrode pillar on the housing in an embodiment of the secondary battery of the present disclosure.
FIG. 11 is a three-dimensional view of the electrode pillar side in an embodiment of the secondary battery of the present disclosure.
FIG. 12 is an exploded view of the electrode pillar cover and the electrode pillar in an embodiment of the secondary battery of the present disclosure.
FIG. 13 is a top view of the electrode pillar side in an embodiment of the secondary battery of the present disclosure.
FIG. 14 is a top view of the electrode pillar side in an embodiment of the secondary battery of the present disclosure after removing the electrode pillar cover.
FIG. 15 is a three-dimensional structural view of a current collecting portion in an embodiment of the secondary battery of the present disclosure viewed from the electrode pillar side.
FIG. 16 is a three-dimensional structural view of a current collecting portion in an embodiment of the secondary battery of the present disclosure viewed from the electrode assembly side.

### DESCRIPTION OF THE EMBODIMENTS

The following describes the implementation of the present disclosure through specific examples. Those skilled in the art can easily understand other advantages and effects of the present disclosure from the contents disclosed in this specification. The present disclosure can also be implemented or applied through other different specific implementations. Various details in this specification can also be modified or changed in various ways based on different viewpoints and applications without departing from the spirit of the present disclosure. It should be noted that, as long as there is no conflict between the embodiments, the following embodiments and the features in the embodiments may be combined with each other. It should also be understood that the terminology used in the embodiments of the present disclosure is for describing specific embodiments, but not for limiting the scope of the present disclosure. Test methods without specifying specific conditions in the following examples usually adopt conventional conditions or conditions recommended by various manufacturers.

When an embodiment provides a numerical range, it should be understood that, unless otherwise stated in the present disclosure, the two endpoints of each numerical range and any value between the two endpoints may be selected. Unless otherwise defined, all technical and scientific terms used in the present disclosure are consistent with the knowledge of the related art and the description of the present disclosure by those skilled in the art. They may also be used with the methods and methods described in the embodiments of the present disclosure. Equipment and materials are similar or equivalent to any methods, equipment and materials of the related art to implement the present disclosure.

It should be noted that terms such as "upper", "lower", "left", "right", "middle" and "one" cited in this specification are only for convenience of description and are not used to limit the scope of this specification. As for the implementable scope of the disclosure, changes or adjustments in the relative relationships shall also be regarded as the implementable scope of the disclosure, provided there is no substantial change in the technical content.

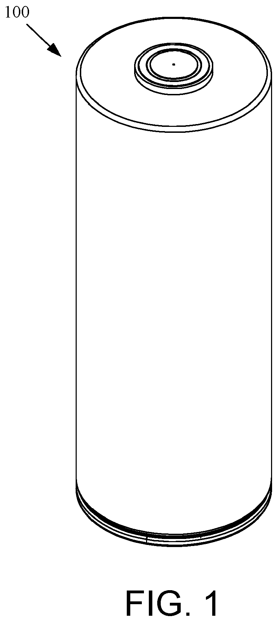

Please refer to FIG. 1 to FIG. 16. The present disclosure provides a secondary battery 100 and an electrical device including the secondary battery 100. The structure of the secondary battery 100 not only enables the welding equipment to weld the current collecting portion 140 and the thinned region 131 outside the housing 110, but also solves the problem of false welding or welding penetration, and achieves a better welding effect.

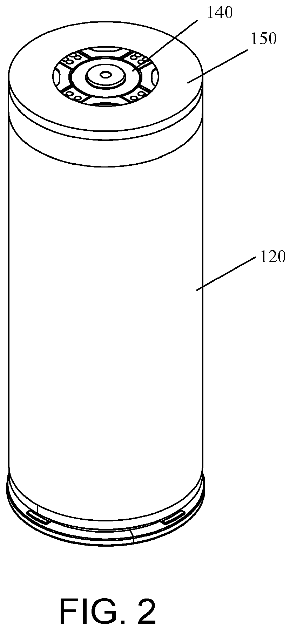

Referring to FIG. 2 to FIG. 5, the secondary battery 100 includes a housing 110, an electrode assembly 120, an electrode pillar 130 and a current collecting portion 140. The housing 110 is disposed to form an internal space for accommodating the electrode assembly 120, wherein the internal space formed by the housing 110 may be used for accommodating the electrode assembly 120, an electrolyte (not shown), and other components. The housing 110 may be of various shapes and sizes, such as cylinder, cuboid, hexagonal prism, etc. Specifically, the shape of the housing 110 may be determined according to the specific shape and size of the electrode assembly 120. The housing 110 may be made of various materials, such as copper, iron, aluminum, stainless steel, aluminum alloy, etc.

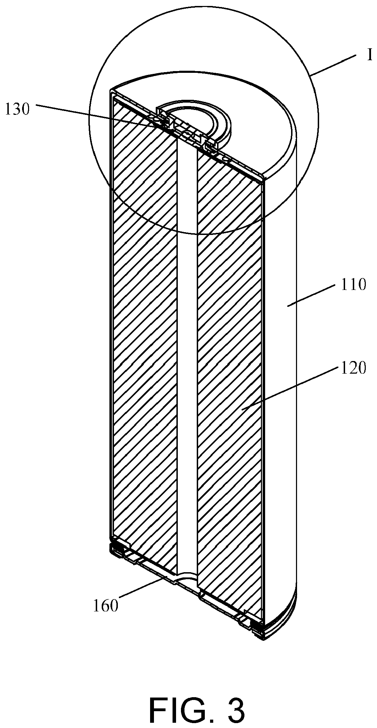

Please refer to FIG. 2 and FIG. 3. In an example of the secondary battery 100 of the present disclosure, the housing 110 is a cylinder with one end closed and the other end open. An end cap 160 seals the opening of the cylinder. In an embodiment, the electrode pillar 130 is electrically connected to the positive tab of the electrode assembly 120 through the current collecting portion 140, and the housing 110 is directly or indirectly (through other current collecting portions) electrically connected to the negative tab of the electrode assembly 120. The entire housing 110 is negatively charged. The positive electrode pillar and an end surface of the housing are both disposed on one side where the electrode pillar 130 is located so that the positive electrode and negative electrode are on the same side. In this way, the electrode pillar 130 and the end cap 160 constitute the positive electrode and negative electrode of the secondary battery 100 respectively. The mounting hole of the electrode pillar 130 is disposed on an end wall 111 at the closed end of the housing 110, and the electrode pillar 130 is disposed in the mounting hole of the electrode pillar 130 in a sealed and insulating manner. This structure of the housing 110 may improve the configuration efficiency, and the assembly and sealing properties are better than that of the housing 110 with openings at both ends.

Referring to FIG. 2 to FIG. 5, the electrode assembly 120 is disposed in the housing 110 in a sealed manner, and the specific form of sealing is not limited. The electrode assembly 120 is a component in the secondary battery 100 that undergoes electrochemical reactions. One or more electrode assemblies 120 may be contained within the housing 110. The electrode assembly 120 is mainly formed by winding or stacking a positive electrode sheet and a negative electrode sheet, and usually a separator is disposed between the positive electrode sheet and the negative electrode sheet. The portions of the positive electrode sheet and the negative electrode sheet that contain an active material constitute the main body of the electrode assembly 120, and each of the portions of the positive electrode sheet and the negative electrode sheet that do not contain the active material constitutes tabs (not shown).

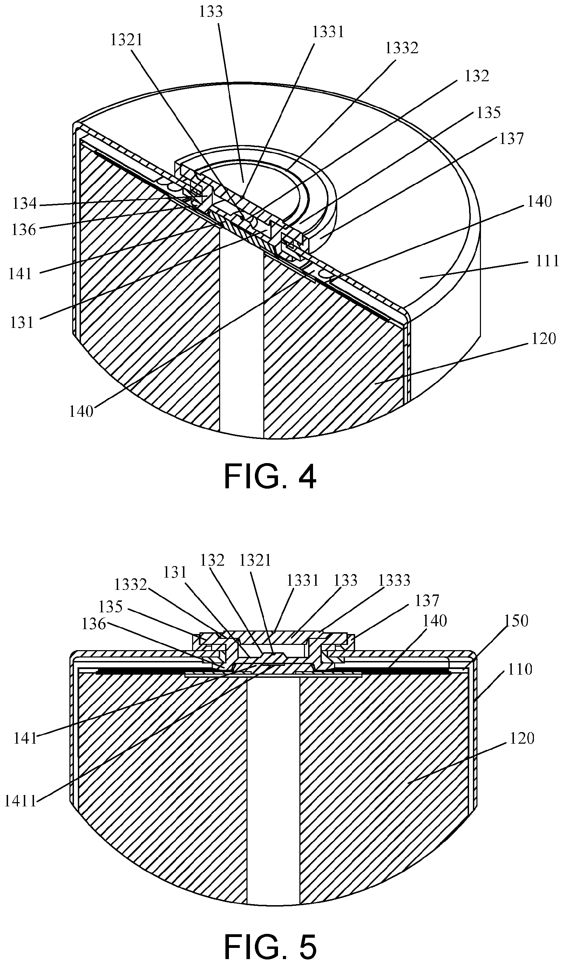

As long as the electrode pillar 130 may be sealed and insulated from the housing 110, the method of disposing the electrode pillar 130 on the housing 110 is not limited. Please refer to FIG. 5 to FIG. 6. In this embodiment, the electrode pillar 130 penetrates the housing in a sealed and insulating manner, and a thinned region 131 with a thickness T1 is disposed on the electrode pillar 130. The thinned region 131 has a surface that may be exposed to the outside of the housing 110. The shape of the thinned region 131 is not limited, and may be, for example, square, annular, round or special-shaped, as long as the shape of the thinned region 131 satisfies the requirement of welding externally with a sufficient welding area. The current collecting portion 140 is disposed in the housing 110 and is located between the electrode assembly 120 and the end wall 111 of the housing 110. One side of the current collecting portion 140 away from the end wall 111 is electrically connected to the electrode (tab) of the electrode assembly 120. One side of the current collecting portion 140 facing the end wall 111 is covered with an insulating film 150. The insulating film 150 is disposed to insulate and isolate the current collecting portion 140 from the end wall 111 of the housing 110. A welding portion 141 with a thickness of T2 is disposed on the current collecting portion 140, and T2 is greater than 0.3T1. The welding portion 141 passes through the through hole on the insulating film 150 and is in conductive contact with the thinned region 131, and is fixed through welding. The shape of the contact surface for conductive contact is not limited, for example, the shape of the contact surface may be square, circular, annular or special-shaped, as long as the shape of the contact surface is able to meet the stable current transmission requirement. Moreover, the welding method is not limited, as long as the welding method allows the thinned region 131 to be welded with the welding portion 141 on the outside of the housing 110. When T2 is less than 0.3T1, that is, when the thickness T1 of the thinned region exceeds the thickness T2 of the welding portion 141 by a great extent, it is required to pass through the thicker thickness T1 when performing welding from the external side of the electrode pillar 130. Under the circumstances, high-energy laser welding is required, and it is difficult to control laser energy. If laser energy is not controlled well, welding penetration is likely to occur and cause the electrode pillar to leak; if laser energy is insufficient, false welding will occur. Therefore, controlling the thickness relationship well helps to control the depth of welding and avoid welding penetration. Accordingly, in the disclosure, by limiting the thicknesses of the thinned region 131 and the welding portion 141, welding requirements may be ensured, and it is possible to prevent excessive heat from being transferred to the electrode assembly 120, so as to solve the problem of false welding and welding penetration caused by the mismatch in thicknesses of the thinned region 131 and the welding portion 141.

In an example of the secondary battery 100 of the present disclosure, a welding mark (not shown) is disposed on the wall of the thinned region 131 away from the welding portion 141. Welding marks are formed during external welding, such as penetration welding by using laser. The shape of the welding mark matches the laser welding trajectory of the welding device, including but not limited to a ring shape.

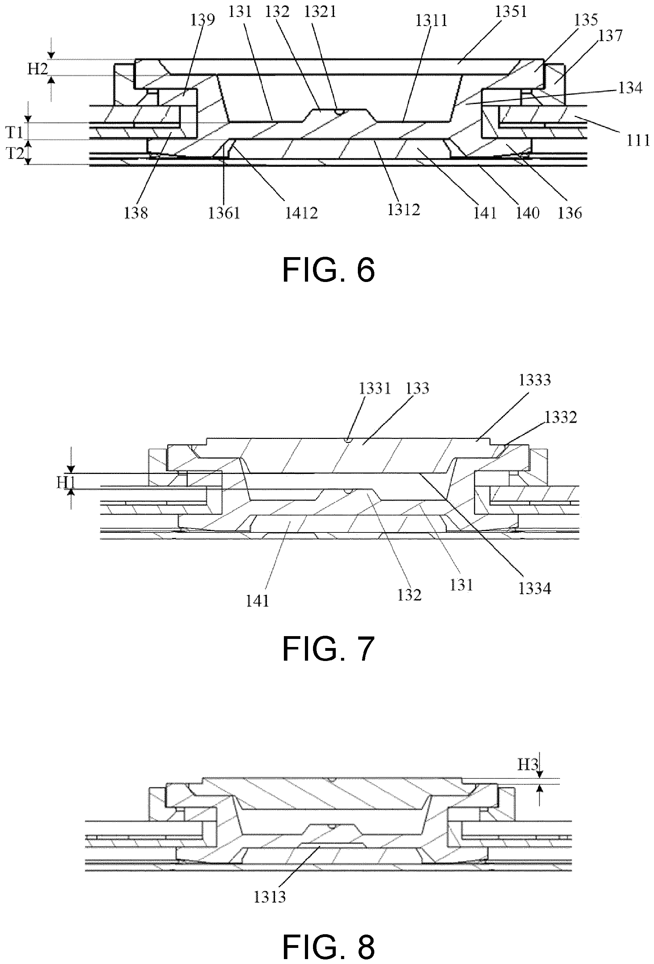

Please refer to FIG. 5 and FIG. 6. In an example of the secondary battery 100 of the present disclosure, a first welding positioning structure 1321 is disposed on the thinned region 131. The first welding positioning structure 1321 is disposed for accurate visualization and identification to position the welding region during welding. As long as it is possible to achieve accurate visualization and identification to position the welding region and an external welding device is applicable, there is no limitation to the shape and structure of the first welding positioning structure 1321. For example, the shape and structure of the first welding positioning structure 1321 may be any one of a tapered hole, a cylindrical hole, or a hemispherical hole.

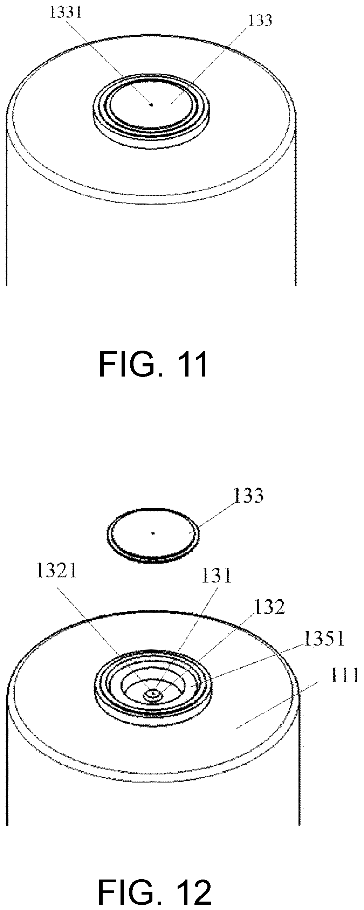

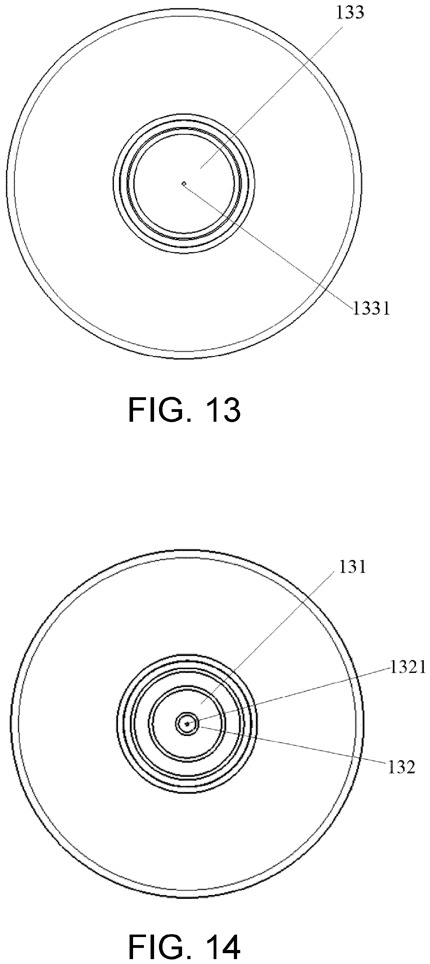

Please refer to FIG. 12 and FIG. 14. Considering the form of welding head of a laser welding device in the welding process for the electrode pillar 130, in an example of the secondary battery 100 of the present disclosure, the housing 110 is cylindrical, and the electrode pillar 130 is also a rotary body structure, preferably, the thinned region 131 is circular, the first welding positioning structure 1321 is disposed at the center of the circle, the first welding positioning structure 1321 is a first hemispherical hole, and the rotation axis of the first hemispherical hole (that is, the axis perpendicular to the end surface of the hemisphere and passing through the center of the sphere) is coaxial with the circular thinned region 131.

Please refer to FIG. 5 and FIG. 6. In an example of the secondary battery 100 of the present disclosure, a reinforcing structure is disposed in the thinned region 131. As long as the thinned region 131 may be reinforced without affecting welding, there is no limitation to the form of the reinforcing structure. In an example of the secondary battery 100 of the present disclosure, the reinforcing structure includes a first protrusion 132, and the first protrusion 132 is disposed on one or both sides of the thinned region 131 along the penetration direction of the electrode pillar 130. The first protrusion 132 makes it possible to prevent the deformation of the welding portion 141 from affecting the welding effect during the configuration of the electrode pillar 130 or the press-fitting process for the current collecting portion 140. It should be noted that if the first protrusion 132 is distributed on both sides of the thinned region 131, corresponding grooves need to be disposed on the welding portion 141 of the current collecting portion 140 to avoid interference with the first protrusion 132 facing one side of the current collecting portion 140.

Please refer to FIG. 5 and FIG. 6. In an example of the secondary battery 100 of the present disclosure, the connection method between the reinforcing structure and the thinned region 131 includes but is not limited to welding, bonding or integral molding. The reinforcing structure includes a frustum disposed in the thinned region 131. The frustum has a smaller circular end surface (hereinafter referred to as the small end) and a larger circular end surface (hereinafter referred to as the large end). The large end of the frustum is in contact with the upper surface of the thinned region 131 and is welded or integrally connected to the thinned region 131. The connection between the large end and the thinned region 131 may increase the stability of the connection and bring a better reinforcing effect compared to a cylindrical cone. The welding region of the thinned region 131 and the current collecting portion 140 encircles the frustum to form an annular welding region, and an annular welding mark is formed on the outer surface of the annular welding region of the thinned region 131.

Please refer to FIG. 5 and FIG. 6. In the present disclosure, the welding reinforcing structure and the first welding positioning structure 1321 may be set independently and separately, or may be combined with each other to form a combination for reinforcing and positioning. In an example of the secondary battery 100 of the present disclosure, the frustum is disposed on one side of the thinned region 131 away from the electrode assembly 120, and the first welding positioning structure 1321 is disposed at the center of the small end surface of the frustum. Such reinforcing structure and the first welding positioning structure 1321 complement each other, simplifying the structure and reducing the area occupied on the surface of the electrode pillar 130. In the meantime, the coaxial arrangement of the annular welding region and the first welding positioning structure 1321 helps to accurately position the welding device.

Taking into account the penetration capabilities and parameters of existing penetration laser welding device, preferably, in an example of the secondary battery 100 of the present disclosure, the thickness T1 of the thinned region 131 is 0.1 mm to 2 mm, and the thickness of the welding portion 141 T2 is 0.1 mm to 3 mm; the thickness T2 of the welding portion 141 is greater than or equal to the thickness T1 of the thinned region 131. In this way, not only that it is possible to better prevent the welding portion 141 from being penetrated when a large amount of laser is adopted for welding to cause the electrode pillar 130 to leak, but also avoid the increase in costs and weight of the secondary battery 100.

Please refer to FIG. 6. In an example of the secondary battery 100 of the present disclosure, the electrode pillar 130 includes a conductive member 134, a first fixing portion 135 and a second fixing portion 136. The conductive member 134 is a cylindrical structure. The conductive member 134 is disposed in the mounting hole of the electrode pillar 130. The first fixing portion 135 is disposed in the circumferential direction of the outer end of the conductive member 134 (an end portion away from the electrode assembly 120) and is clamped outside the end wall 111 of the closed end (one side away from the electrode assembly 120). The second fixing portion 136 is disposed in the circumferential direction of the inner end of the conductive member 134 (an end portion facing the electrode assembly 120), and is clamped inside the end wall 111 of the closed end (one side facing the electrode assembly 120). In an example of the secondary battery 100 of the present disclosure, the projections of the first fixing portion 135 and the second fixing portion 136 along the penetration direction of the electrode pillar 130 at least cover the projection of the mounting hole of the electrode pillar 130. In this way, on the one hand, the configuration stability of the electrode pillar 130 may be improved; on the other hand, the larger first fixing portion 135 and/or the second fixing portion 136 may press-fit the insulating member or sealing member 139, so that the electrode pillar 130 and the mounting hole of the electrode pillar 130 may be sealed and insulated from each other while the electrode pillar 130 is inserted.

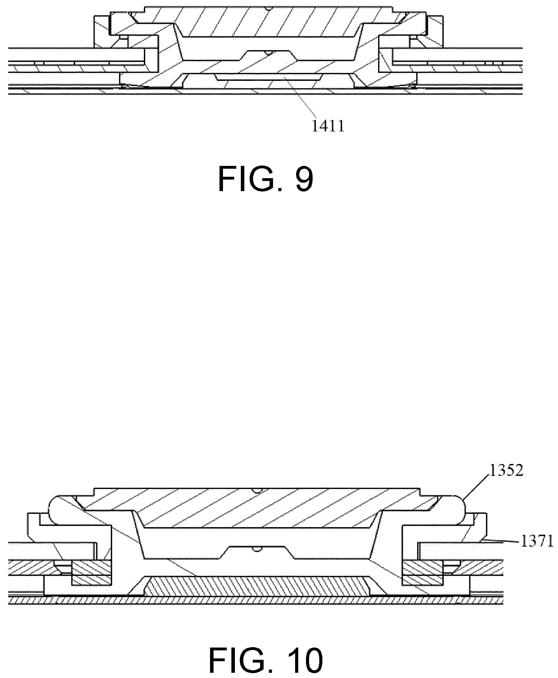

Please refer to FIG. 6 and FIG. 10. In an example of the secondary battery 100 of the present disclosure, the electrode pillar 130 achieves insulation and separation through the first insulating member 137, the second insulating member 138 and the end wall 111 respectively, and the mounting hole of the electrode pillar 130 is sealed by pressing-fitting the sealing member 139 through the first fixing portion 135. The first insulating member 137 is disposed between the first fixing portion 135 and the outer wall of the closed end of the housing 110. An insulation reinforcing structure that increases the creepage distance is disposed on the first insulating member 137. The insulation reinforcing structure may be a structure that is able to increase the conductive path between the housing 110 and the first fixing portion 135, for example, by changing the straight path on the conductive path between the housing 110 and the first fixing portion 135 to a curve or multiple polylines, etc. Taking into consideration the necessity and cost of creepage reinforcement, for example, the insulation reinforcing structure may include chamfers or arcs disposed on the upper and/or lower sides of the side wall of the insulating member. In this embodiment, the insulation reinforcing structure includes a first chamfer 1371 disposed between the outer wall of the insulating member and the contact surface between the insulating member and the housing 110, and may further include a first chamfer 1371 disposed on the top of the upper fixing portion; the types of chamfers include but are not limited to straight chamfers or arc chamfers. In another embodiment, the insulation reinforcing structure includes a chamfer disposed between the upper end portion of the insulating member and the side wall of the insulating member. In yet another embodiment of the present disclosure, the insulation reinforcing structure includes a chamfer disposed on the upper end portion of the insulation member and the side wall of the insulating member, while further including a chamfer disposed between the outer wall of the insulating member and the contact surface between the insulating member and the housing 110.

When multiple secondary batteries 100 are connected in series or parallel to form a battery module or a battery pack, the outer surface of the secondary batteries might be cleaned with laser to ensure the reliability of welding when connecting external batteries. In an example of the secondary battery 100 of the present disclosure, the first insulating member 137 is made of transparent or translucent plastic, for example, the material may be any one of PFA, PP, PBT, and PPS. In this way, it is possible to prevent conventional plastic parts which are made of black or other opaque materials from absorbing heat and burn out too easily and causing failure of insulation and sealing.

Please refer to FIG. 6. In an example of the secondary battery 100 of the present disclosure, a middle portion of an end surface at one side of the electrode pillar 130 facing away from the electrode assembly 120 and/or a middle portion of an end surface of the electrode pillar 130 facing the electrode assembly 120 is recessed to form the thinned region 131. It should be noted that the thinned region 131 may be formed only by a recess in the middle portion of the end surface at one side of the electrode pillar 130 facing away from the electrode assembly 120 or a recess in the middle portion of the end surface of the electrode pillar 130 facing the electrode assembly 120, or may be formed by recesses in both of the middle portion of the end surface at one side of the electrode pillar 130 facing away from the electrode assembly 120 and the middle portion of the end surface of the electrode pillar 130 facing the electrode assembly 120. In an example of the secondary battery 100 of the present disclosure, the thinned region 131 includes a first plane 1311 and a second plane 1312 disposed in parallel. The first plane 1311 is formed by a recess in the middle portion of the end surface of the electrode pillar 130 facing away from the electrode assembly 120, and the second plane 1312 is formed by a recess in the middle portion of the end surface of the electrode pillar 130 close to the electrode assembly 120, so that the whole integrity forms an "H"-like structure, and the thinned region 131 is disposed at the horizontal connection segment of the "H" structure. On the one hand, the parallel first plane 1311 and the second plane 1312 may make the wall thickness of the thinned region 131 uniform, and on the other hand, the planes may facilitate welding.

Please refer to FIG. 6 and FIG. 12. In an example of the secondary battery 100 of the present disclosure, the welding portion 141 is a second protrusion 1413 disposed on the current collecting portion 140. The upper end surface of the second protrusion 1413 and the thinned region 131 are fixed through welding. As long as the second protrusion 1413 is able to reliably contact the thinned region 131 to be welded together, there is no limitation to the shape of the second protrusion 1413, for example, the cross section of the second protrusion 1413 may be circular, square, etc. Preferably, in an example of the secondary battery 100 of the present disclosure, the current collecting portion 140 includes an annular current collecting portion body 142, and a second protrusion 1413 is a cylindrical boss. The second protrusion 1413 is disposed at the center of the current collecting portion body 142 and is coaxially disposed with the current collecting portion body 142. The height of the second protrusion 1413 is greater than the thickness of the current collecting portion body 142, and the thickness of the second protrusion 1413 is 0.3 mm to 3 mm. On the one hand, such arrangement makes it possible for welding portion 141 to have a thicker welding thickness to prevent welding penetration or heat of welding from damaging the electrode assembly 120. On the other hand, it is possible to allow the current collecting portion body 142 to have a thinner thickness, thereby making it easier to realize penetration welding of the current collecting portion body 142 with the tab of the electrode assembly 120.

Please refer to FIG. 6. In an example of the secondary battery 100 of the present disclosure, a guiding structure that guides the welding portion 141 to contact the thinned region 131 is disposed on the electrode pillar 130 and/or the current collecting portion 140. The guiding structure helps to introduce the welding portion 141 of the current collecting portion 140 to a position under the thinned region 131. It should be noted that the guiding structure may be disposed only on the welding portion 141, or may be disposed only in the thinned region 131, or the guiding structure may be disposed on the welding portion 141 and in the thinned region 131 both, and guide the welding portion 141 to be in contact with the thinned region 131 simultaneously or in a sequential manner. The guiding structure includes one or a combination or more of the following shapes: a rounded corner, a chamfer, or a slope shape. In this example, the thinned region 131 is annular, the welding portion 141 is circular or annular, and the guiding structure includes a first tapered surface 1361 disposed at an opening on the side wall of the thinned region 131 as well as a second tapered surface 1412 disposed at the top of the side wall of the second protrusion 1413. A large end of the first tapered surface 1361 faces one side of the electrode assembly 120, the small end of the first tapered surface 1361 faces away from the electrode assembly 120, and the large end of the second tapered surface 1412 faces one side of the electrode assembly 120, and a small end of the second tapered surface 1412 faces away from the electrode assembly 120.

In an example of the secondary battery 100 of the present disclosure, an escape groove is disposed in the thinned region 131 and/or on the current collecting portion 140. Such configuration prevents local deformation from affecting the bonding at the welding region where the thinned region 131 is welded to the welding portion 141. It should be noted that as long as the escape groove is disposed at the contact area where the thinned region 131 and the welding portion 141 are in contact to reduce the contact area between the two, there is no limitation to the configuration position of the escape groove. For example, as shown in FIG. 9, the first escape groove 1411 may only be disposed on the welding portion 141, or as shown in FIG. 8, a second escape groove 1313 may only be disposed on the lower surface of the thinned region 131. It is also possible to dispose a first escape groove 1411 on the welding portion 141 and a second escape groove 1313 on the lower surface of the thinned region 131 simultaneously. There is no limitation to the shape and depth of the escape groove. For example, the shape may be circular, square, annular, etc. Preferably, in this embodiment, the thinned region 131 is circular, the second boss is circular, and the escape groove is also preferably circular and is coaxially arranged with the first boss and the thinned region 131, so it is possible to ensure the formation of a uniform annular welding region around the escape groove and avoid deformation caused by non-uniform welding stress.

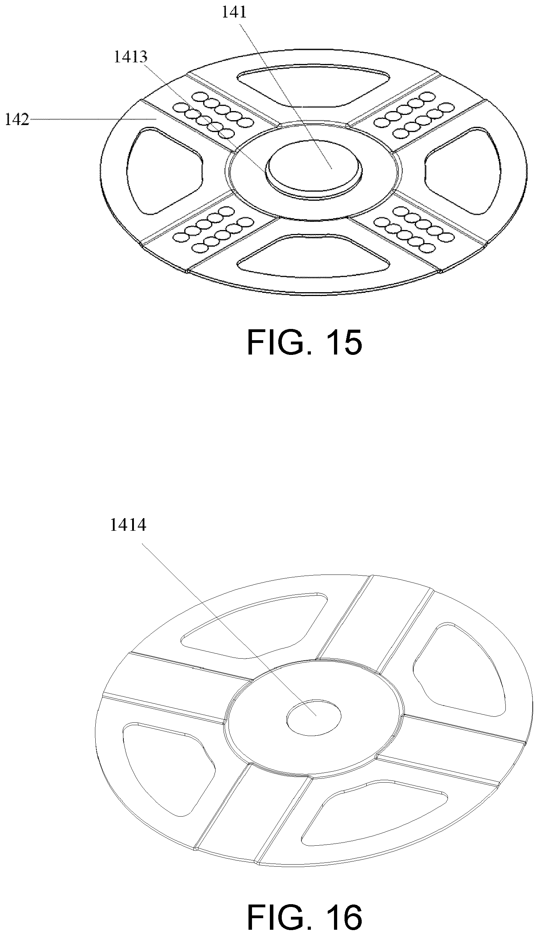

Referring to FIG. 15 and FIG. 16, in an example of the secondary battery 100 of the present disclosure, a second groove 1414 is disposed on one side of the current collecting portion 140 facing the electrode assembly 120. The second groove 1414 may reduce damage caused to the electrode assembly 120 by thermal effects during the welding process. Preferably, the second groove 1414 is disposed on the lower surface of the welding portion 141, and the projection along the penetration direction of the electrode pillar 130 covers the welding region of the welding portion 141. Such arrangement prevents the welding region from directly contacting the electrode assembly 120, thus reducing the damage caused to the electrode assembly 120 by thermal effects during the welding process.

Please refer to FIG. 6 and FIG. 12. In an example of the secondary battery 100 of the present disclosure, a sinking platform 1351 is disposed on the upper portion of the electrode pillar 130. The projection of the sinking platform 1351 along the penetration direction of the electrode pillar 130 at least covers the thinned region 131. The shape of the sinking platform 1351 is not limited, and may be square or circular, for example. Preferably, in an example of the secondary battery 100 of the present disclosure, the side wall of the sinking platform 1351 is a rotating structure with an inverted trapezoidal structure. The depth H2 of the sinking platform 1351 along the penetration direction of the electrode pillar 130 is 0.1 mm to 1.5 mm. In an example of the secondary battery 100 of the present disclosure, the secondary battery 100 further includes an electrode pillar cover 133. The shape of the electrode pillar cover 133 matches the sinking platform 1351. The electrode pillar cover 133 is disposed on the sinking platform 1351 and fixed to the electrode pillar 130 by conductive welding. Such configuration may make it possible to form a larger conductive end surface on the upper portion of the electrode pillar 130, ensuring that the electrode pillar 130 of the single secondary battery has a larger welding surface when multiple secondary batteries are connected in series or in parallel. In the meantime, the setting of the sinking platform 1351 makes it possible to avoid damage to the thinned region 131 during the welding process of the electrode pillar cover 133 and the sinking platform 1351. In an example of the secondary battery 100 of the present disclosure, a second welding positioning structure 1331 is disposed on the electrode pillar cover 133. The second welding positioning structure 1331 is any one of a tapered hole, a cylindrical hole, or a hemispherical hole.

Please refer to FIG. 7. In an example of the secondary battery 100 of the present disclosure, a third protrusion 1334 is disposed on one side of the electrode pillar cover 133 facing the thinned region 131. The projection of the third protrusion 1334 along the penetration direction of the electrode pillar 130 at least covers the thinned region 131. The third protrusion 1334 is accommodated in the cavity between the electrode pillar cover 133 and the thinned region 131. The setting of the third protrusion 1334 may significantly improve the wall thickness and strength with respect to the electrode pillar cover 133 and prevent melting penetration caused by laser welding.

Please refer to FIG. 7. In an example of the secondary battery 100 of the present disclosure, the first protrusion 132 is disposed on one side of the thinned region 131 facing the electrode pillar cover 133 and corresponds to the position of the third protrusion 1334. The first protrusion 132 is configured to abut against the third protrusion 1334 when the external force received by the electrode pillar cover 133 is greater than a set threshold. In this way, the first protrusion 132 resists against the third protrusion 1334 when a large external force is applied, which may improve the overall structural strength of the electrode pillar 130 as a unit and ensure structural reliability.

Please refer to FIG. 7. As long as the first protrusion 132 resists against the third protrusion 1334 when the external force is greater than the set threshold, the gap between the first protrusion 132 and the third protrusion 1334 may be selected according to the set external force threshold. Considering the pressing force during laser penetration welding, preferably, the gap H1 between the first protrusion 132 and the third protrusion 1334 in this embodiment is 0.05 mm to 0.5 mm. When subjected to a large external force, the first protrusion 132 and the third protrusion 1334 may resist against each other, which may improve the overall structural strength of the electrode pillar 130 as a unit and ensure structural reliability.

Please refer to FIG. 8. As long as the thinned region 131 is able to be shielded and protected and a larger external electrical connection plane is able to be formed, the structural form of the electrode pillar cover 133 is not limited. Preferably, in an example of the secondary battery 100 of the present disclosure, the electrode pillar cover 133 includes a third fixing portion 1332 and an external welding portion 1333. The third fixing portion 1332 is disposed for welding and fixing with the first fixing portion 135, and the external welding portion 1333 is disposed for external electrical connection to other structures. The thickness of the external welding portion 1333 is greater than the thickness of the fixing portion. In an example of the secondary battery 100 of the present disclosure, the external welding portion 1333 is higher than the third fixing portion 1332, and the height difference H3 is 0.05 mm to 1 mm. The height within the range makes it possible to avoid the impact caused by the operation of welding the fixing portion to the protrusion to the external adapter member.

A second aspect of the present disclosure further provides an electrical device, which includes a working portion and the secondary battery described in any one of the above embodiments, and the working portion is electrically connected to the secondary battery 100 to obtain electrical energy for support. Electrical devices may be vehicles, cell phones, portable devices, laptops, ships, spacecraft, electric toys and power tools, etc. Vehicles may be fuel vehicles, gas vehicles or new energy vehicles, and new energy vehicles may be pure electric vehicles, hybrid vehicles or extended-range vehicles, etc.; spacecraft include aircraft, rockets, space shuttles, spaceships, etc.; electric toys include fixed type or mobile electric toys, such as game consoles, electric toy cars, electric toy ships and electric toy airplanes, etc.; electric tools include metal cutting electric tools, grinding electric tools, assembly electric tools and railway electric tools, for example, electric drills, electric grinders, electric wrenches, electric screwdrivers, electric hammers, impact drills, concrete vibrators, planers and more. The embodiments of this disclosure impose no special limitation to the above-mentioned electrical devices.

In the secondary battery 100 of the disclosure, by disposing a thinned region 131 on the electrode pillar 130, and disposing a welding portion 141 on the current collecting portion 140, and making the thinned region 131 to be in conductive contact with the welding portion 141, it will not be necessary for the welding device to enter the inside of the housing 110 the secondary battery 100, and it is possible to perform welding on the current collecting portion 140 and the thinned region 131 outside the housing 110. In this manner, not only that the production efficiency may be improved, the requirement for process positioning accuracy may be reduced, and the metal shavings generated inside the secondary battery 100 during the process of welding the electrode pillar 130 and the current collecting portion may be avoided, thereby enhancing reliability and safety of the secondary battery 100. In the meantime, the secondary battery 100 of the disclosure further limits the thicknesses of the thinned region 131 and the welding region 141, which not only solves the problem of false welding or welding penetration, but also achieves a better welding effect and also improves the electrical connection strength and current-carrying capacity. Meanwhile, the welding portion 141 of this type of secondary battery 100 is located on the outside of the housing 110, which facilitates detection and identification and helps ensure consistency in production and manufacturing. The electrical device of the disclosure includes the secondary battery 100 of the disclosure, and has high reliability in supplying electrical energy. Therefore, the disclosure effectively overcomes some practical problems in the related art and has high values of utilization and significance of use. The above embodiments are only illustrative to illustrate the principles and effects of the present disclosure, but are not intended to limit the present disclosure. Anyone familiar with this technology can modify or change the above embodiments without departing from the spirit and scope of the present disclosure. Therefore, all equivalent modifications or changes made by those with ordinary knowledge in the technical field without departing from the spirit and technical ideas disclosed in the present disclosure shall still be covered by claims of the present disclosure.

### List of Reference Numerals

100: secondary battery
110: housing
111: end wall
120: electrode assembly
130: electrode pillar
131: thinned region
1311: first plane
1312: second plane
1313: second escape groove
132: first protrusion
1321: first welding positioning structure
133: electrode pillar cover
1331: second welding positioning structure
1332: third fixing portion
1333: external welding portion
1334: third protrusion
134: conductive member
135: first fixing portion
1351: sinking platform
1352: first round corner
136: second fixing portion
1361: first tapered surface
137: first insulating member
1371: first chamfer
138: second insulating member
139: sealing member
140: current collecting portion
141: welding portion
1411: first escape groove
1412: second tapered surface
1413: second protrusion
1414: second groove
142: annular current collecting portion body
150: insulating film
160: end cap

## Claims

1. A secondary battery (100) comprising:
a housing (110);
an electrode assembly (120) sealed and disposed in the housing (110);
an electrode pillar (130) passing through the housing (110) in a sealed and insulating manner and disposed with a thinned region (131) with a thickness of T1;
a current collecting portion (140) disposed in the housing (110) and electrically connected with an electrode of the electrode assembly (120); wherein the current collecting portion (140) is disposed with a welding portion (141) with a thickness of T2, and T2 is greater than 0.3T1; the thinned region (131) is in conductive contact with the welding portion (141) and is fixed through welding.

2. The secondary battery (100) according to claim 1, wherein a reinforcing structure is disposed in the thinned region (131).

3. The secondary battery (100) according to claim 2, wherein the reinforcing structure comprises a first protrusion (132), and the first protrusion (132) is disposed on one or both sides of the thinned region (131) along a penetration direction of the electrode pillar (130).

4. The secondary battery (100) according to claim 1, wherein the thickness T1 of the thinned region (131) is 0.1 mm to 2 mm, and the thickness T2 of the welding portion (141) is 0.1 mm to 3 mm; the thickness T2 of the welding portion (141) is greater than or equal to the thickness T1 of the thinned region (131).

5. The secondary battery (100) according to claim 1, wherein the housing (110) is a cylinder with one end closed and the other end open, a mounting hole of the electrode pillar (130) is disposed on a closed end wall (111) of the housing (110), and the electrode pillar (130) is disposed in the mounting hole of the electrode pillar (130) in a sealed and insulating manner.

6. The secondary battery (100) according to claim 5, wherein the electrode pillar (130) comprises a conductive member (134), a first fixing portion (135) and a second fixing portion (136), the conductive member (134) penetrates into the mounting hole of the electrode pillar (130), the first fixing portion (135) and the second fixing portion (136) are respectively disposed at an outer end and an inner end of the conductive member (134), and are respectively clamped on an outer side and an inner side of the closed end wall (111).

7. The secondary battery (100) according to claim 6, wherein an insulating member (137) is disposed between the first fixing portion (135) and the housing (110), and the insulating member (137) is made of transparent or translucent plastic.

8. The secondary battery (100) according to claim 1, wherein the thinned region (131) comprises a first plane (1311) and a second plane (1312) disposed in parallel, the first plane (1311) is formed by a recess in a middle portion of an end surface of the electrode pillar (130) away from the electrode assembly (120), and the second plane (1312) is formed by a recess in a middle portion of an end surface of the electrode pillar (130) close to the electrode assembly (120).

9. The secondary battery (100) according to claim 1, wherein a guiding structure (1361, 1412) that guides the welding portion (141) to come into contact with the thinned region (131) is disposed on the electrode pillar (130) and/or the current collecting portion (140); the guiding structure (1361, 1412) comprises one or a combination of more of the following shapes: a rounded corner, a chamfer, or a slope shape.

10. The secondary battery (100) according to claim 1, wherein an escape groove (1313, 1411) is disposed in the thinned region (131) and/or on the current collecting portion (140).

11. The secondary battery (100) according to claim 1, wherein the welding portion (141) is a second protrusion (1413) disposed on the current collecting portion (140), and the second protrusion (1413) is fixed to the thinned region (131) through welding; the current collecting portion (140) comprises an annular current collecting portion body (142), the second protrusion (1413) is disposed at a center of the current collecting portion body (142), a height of the second protrusion (1413) is greater than a thickness of the current collecting portion body (142), and a thickness of the second protrusion (1413) is 0.3 mm to 3 mm.

12. The secondary battery (100) according to claim 1, wherein a sinking platform (1351) is disposed on an upper portion of the electrode pillar (130), and a projection of the sinking platform (1351) along a penetration direction of the electrode pillar (130) at least covers the thinned region (131).

13. The secondary battery (100) according to claim 12, wherein the secondary battery (100) further comprises an electrode pillar cover (133), a shape of the electrode pillar cover (133) matches the sinking platform (1351), and the electrode pillar cover (133) is disposed on the sinking platform (1351) and is fixed to the electrode pillar (130) through welding.

14. The secondary battery (100) according to claim 13, wherein a third protrusion (1334) is disposed on one side of the electrode pillar cover (133) facing the thinned region (131), and a projection of the third protrusion (1334) along the penetration direction of the electrode pillar (130) at least covers the thinned region (131).

15. The secondary battery (100) according to claim 14, wherein a first protrusion (132) corresponding to a position of the third protrusion (1334) is disposed on one side of the thinned region (131) facing the electrode pillar cover (133), and the first protrusion (132) is configured to abut against the third protrusion (1334) when an external force received by the electrode pillar cover (133) is greater than a set threshold.
